Europäisches Patentamt

European Patent Office

Office européen des brevets

(19)

(11) Publication number: **0 072 598**
**A1**

(12) # EUROPEAN PATENT APPLICATION

(21) Application number: **82201016.1**

(22) Date of filing: **12.08.82**

(51) Int. Cl.³: **H 02 J 3/14**
**H 02 J 3/38, F 03 D 9/00**

(30) Priority: **14.08.81 NL 8103812**

(43) Date of publication of application:
**23.02.83 Bulletin 83/8**

(84) Designated Contracting States:
**AT BE CH DE FR GB IT LI NL SE**

(71) Applicant: **van den Berg, Hendrik**
**Tussenlanen 1**
**NL-2861 CA Bergambacht(NL)**

(72) Inventor: **van den Berg, Hendrik**
**Tussenlanen 1**
**NL-2861 CA Bergambacht(NL)**

(74) Representative: **Rhijnsburger, Johan Gerard**
**'s-Gravenbroekseweg 32**
**NL-2811 GE Reeuwijk(NL)**

(54) Process for matching the demand for electrical energy to the supply of electrical energy as well as a circuit used for this purpose.

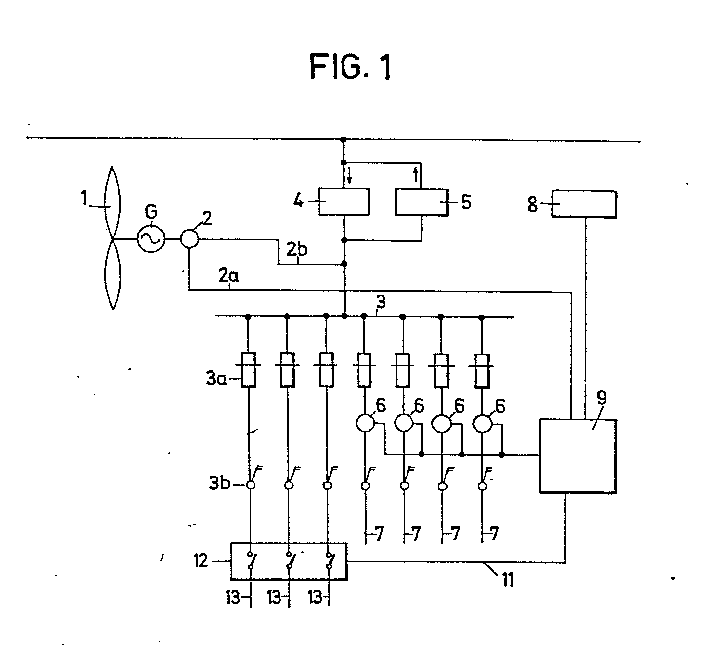

(57) Process and circuit for matching the demand to the supply of electrical energy of one or more alternative energy sources which supply electrical energy to a consumer block or blocks, wherein as little as possible energy is drawn from the networks resp. is supplied thereto. The power available and consumed as well as the power to be consumed are constantly compared and dependent on this comparison the influenceable consumer apparatuses are controlled and switched according to time priorities inserted by the users. A circuit for a single building is indicated in figure 1, wherein via a control panel 8 and controller 9 the influenceable consumer apparatuses are controlled. This circuit may form a component of a number of interrelated units, which are controlled by a central controller.

FIG. 1

EP 0 072 598 A1

Process for matching the demand for electrical energy to the supply of electrical energy as well as a circuit used for this purpose

The invention relates to a process for matching the demand for electrical energy to the supply of alternative energy from sources which supply electrical energy to a consumer block or a series of related consumer blocks as well as a suitable circuit used for this purpose.

A consumer block is defined as a unit comprising a group of consumer apparatuses which trough one connection provided with consumption meters are supplied with electrical energy, such as a house, while by related blocks a number of units are understood which are connected to one or more electrical sources and which separately are connected to the energy source or sources, e.g. a number of houses combined into an ap.artment-building or district as well as facilities, such as hothouses and other buildings in as much as separate blocks with consumer apparatuses are present which in the same block are served centrally.

Alternative energy sources are defined as electrical energy supply sources other than the electrical network. As such may be mentioned wind driven generators, solar cells, combinations thereof as well as other systems which based on other energy sources than fossil fuel are able to generate energy.

The invention is particularly suited for the private sector wherein with the process of the invention the greatest advantages are achievable. A promising alternative energy source is the wind driven generator, with which in areas with normally much wind cheap energy can be produced with relatively low investment. Progressive developments in the field of solar cells lead to the expectation that sooner or later the produced energy in relation to the investments will become economically profitable.

The objections of the above types of alternative energy sources are caused by the fact that the supply of energy is not uniform because of variations in the natural forces, wherefor problems arise when on the side of the consumer a momentary large demand for energy occurs which cannot be satisfied. Under such conditions one has to switch over to the electrical network, which then functions as a buffer system. The situation may further arise that a surplus of energy can be supplied. This surplus may be supplied to the electrical network but on one hand this is not economical since one will receive a lower price for this energy than one has to pay when consuming it, while on the other hand a too large supply to the electrical network will lead to stability problems.

Thus it is possible that a situation will arise wherein a relatively low energy supply coincides with a high demand; at that moment energy has to be withdrawn from the electrical network; a short time afterwards the energy supply may again be high and the demand may be low; in that case one has to supply electricity to the networks. Notwithstanding the fact that on a time average sufficient energy was available one has worked very unproductive and suffered losses. The invention largely avoids such situations.

From the above it follows that the problems of non-predictable energy supply of alternative energy sources are in fact shifted to the energy factories. It is however desirable that one or more housing blocks drawing energy from alternative energy sources would be self-supporting and need only be connected to the electrical network in exceptional cases.

The main objective of the invention is to largely overcome the aforementioned objections and to provide a process wherein a more uniform consumption of alternative energy is possible so that only in exceptional cases recourse has to be taken to the electrical utility company.

It is an object of the invention to provide a process wherein the demand of a separate consumer apparatus block, which is connected to one or more energy sources, can be controlled by means of influencable consumer apparatuses.

The process is contemplated for use with alternative energy sources as defined, which possess a variable electrical energy supply pattern.

It is a further object of the invention to provide a process wherein related consumer blocks, such as apartment-buildings, districts, facilities, hothouses, are served and wherein the control is carried out in two stages, i.e. in respect of the block as a total and in respect of the combining parts.

It is a further object of the invention to provide a process wherein the energy supply peaks and the energy demand peaks are matched to each other,while the surplus energy is stored as heat and/or cold in as high a quantity as possible.

It is a further object of the invention to provide a process wherein an optimal use is made of the electrical energy supplied and generated by wind driven generators or solar cells and similar alternative energy sources, in such a way that it will practically not be necessary to switch in the electrical network, which normally functions as buffer.

It is a further object of the invention to provide such a system that the surplus of electrical energy supplied from the alternative energy sources is stored as heat in hot water reservoirs, which is obtained by means of a heat pump.

It is a further object of the invention to provide a wind driven generator with integrated heat pump,i.e. with the propellor shaft directly coupled to the compressor of the heat pump. In this aspect it is favorable to accommodate the heat exchanger in the top of the house.

The invention also comprises a circuit for carrying out the above mentioned process, provided with a controller by means of which the information of the energy source (or sources) functioning as energy supplier and of the individual and if need be the joint consumers is registered, which information in connection with the stored characteristics of the consumer apparatuses, especially the influencable consumer apparatuses, will be processed to a more balanced demand on the supplying net.

From the United States Patent Specification 4,216,384 a system is known for monitoring and controlling the electrical power consumption, wherein individual loads are shedded when the total instantaneous energy consumption is larger than a preselected programmed limit or set point in order to keep the energy consumption within acceptable limits. It is intended to limit the "peak" consumption, i.e. in the range that the energy prices are highest. The system automatically selects a smaller or larger load dependent on the state of power consumption in comparison with the set point; and further the priorities for shedding of the loads can be changed.

Said system is different from that of the invention in that no alternative energy for generating electricity is used.

In the present invention one starts from a situation wherein the upper limit of the permissible consumption is variable and one also has to take into account a too high as well as a too low power supply.

The invention has as advantages that no particularly large generator is necessary and that the supply of energy to the electricity network may be avoided. Thus a more balanced optimal demand on the energy source will be obtained.

The invention starts from the principle that with various consumer apparatuses it is not necessary to directly supply energy and that by influencing such apparatuses a better distribution of the demand may be obtained.

Thus the invention relates to a process as mentioned in the preamble characterized in that the electrical energy supplied will be distributed among the consumer apparatuses in such a way that substantially no overload of the available quantity of electrical energy occurs and the buffer net, if present, need practically not be called upon.

In a more general sense the invention relates to a process for matching the demand for electrical energy to the supply of electrical energy of one or more related blocks or groups of related energy-consuming blocks, characterized in that the available quantity of energy as well as the consumed energy is continuously measured, which information is passed to a central controller, in that information related to the desired use of the energy consuming apparatuses through a control panel by at least one or more adjustable parameters, in the form of time priorities, is passed to the central controlller, said controller being coupled to all consumer apparatuses via the block controller and being in controllable contact with the latter, wherein the characteristics of all apparatuses and parts thereof are registered in the memory of the block controller, and in that of the non-influencable apparatuses continuously the consumed power is measured which is compared with the available power, on account of which is determined in which way the switching in and out of the apparatuses via the priorities introduced into the controller proceeds, which sequential switching of the apparatuses is carried out in such a way that the power presented is not exceeded, while in case of excess power this energy may if desired be stored in a hot water supply or reservoir.

In particular   the invention is characterized in that the available power and the power absorbed and to be absorbed are constantly compared and dependent on the difference the influencable consumer apparatuses are controlled and switched in accordance with time priorities inserted. In particular   the influenceable consumer apparatuses are automatically distance controlled.

In carrying out the invention an essential difference has to be made between the types of consumer  apparatuses. These can be divided into three groups, i.e. apparatuses which can not be influenced by any control, apparatuses which are directly influenceable by a control as well as apparatuses which can be controlled via the control panel. The control is largely effected by these last apparatuses. Most of these apparatuses, like for example washing machines, dish washers, drying apparatuses, electrical ovens and heat pumps,need not directly use the energy asked for.The consumer may now indicate within which time period said type of apparatus should have performed its task, or he may fix a general guideline. These data are put in in the control panel  which is present per block and which transmits the data put in to the controller. The controller working as it were as an "energy shaver" will automatically effect that within a set time the task asked for is performed using the total or a substantial part of the power supplied by the energy source.

Within the first group fall a.o. illumination, radio's, production-apparatuses etc, the second group comprising for example  refrigerators, freezers, heat pumps, central heating pumps,water heaters etc.The characteristics of the apparatuses meant under b and c and the time ofswitching during normal use are registered in the controller.If  the power supplied is insufficient the controller for example will  liberate power in temporarily switching off one or more apparatuses of group b, possibly one after the other, which enables switching in   apparatuses of group c.

On the other hand when more energy is available than asked for the wind driven generator or any other energy source utilized can be connected to a heat pump which is able to convert the surplus electrical power supplied into heat, that can be used for heating a hot water reservoir functioning as heat storage.For this purpose one can make use of a combined wind driven generator/ heat pump to generate predominantly thermal energy. Such a type of combination may also be used for the instant process wherein the heat pump is functioning as a secondary energy source.

The process and apparatus as described are as such suitable for the controlling of the energy consumption of an individual user,especially in separate houses, wherein the occupant is able to feed in his program through the control panel.

The process of the invention is especially useful for larger groups of related blocks, i.e. individual blocks which are interrelated through a common exploitation of one or more of the afore mentioned electrical energy sources, especially alternative sources.In this particular embodiment a main controller is present which is directly connected to the energy source(s) as well as to the central control system of the separate blocks, such as separate buildings in a  flat-building or in a  quarter, or blocks in a facility. The control mechanism of each separate building unit  regularly transmits especially after very short time intervals the consumed and demanded power to the central controller.Based on the information received the central system determines which power per block can be consumed without using power from the utility.

The control unit per block is working autonomously and is operating as far as possible within the limits of consumed power set by the central system. In the system per block, thus per building unit, a supply meter is installed and for all building units together centrally a supply meter to the electrical networks, a return meter and a meter for the mill input, or from any other alternative energy source used.

By means of the meters the price per kilowatthour can be determined and charged to the individual users. From the above it follows that the process of the invention leads to savings for the individual users either separately or as members of a group of users having a common energy source,so that the investment costs of the apparatus are justified.

One also reaches that the individual users transmit their information because on account of that they will just achieve savings in energy costs.

Additional information can be fed to the controller to give the consumption curve a smooth course. Warnings can be built in sothat when temporarily no energy is consumed in a particular block the related controller can be disconnected untill a counter signal will be given;one can also put into the memory averaged consumptiondata which enables to a certain extent a prognosis of the energy consumption, which for example also may be done by reporting absenteism, while further lights may be arranged visualizing the power supply condition, for instance red signifying insufficiently supplied electricity,necessitating switching to the utility at increasing demand; orange meaning that the power supplied and power consumed are about in equilibrium and green meaning that the power supplied is exceeding the power consumed and the heating water reservoir is being heated.

The control panel may be arranged in several ways.Generally it will consist of a panel containing a number of buttons serving as indicators.for the apparatuses which are needed and the period within which they are needed.For example in case of a washing machine one can indicate the particular program desired as well as that it has to be performed within say two hours. The program may of course be carried out instantly but then one runs the risk that the electrical network has to be switched in and one has to pay more for the energy supplied than in case the controller is switched in with the time priority program.

The control panel may also be provided with rotatable buttons with which time sequences can be set and also the code, e.g. a number for the relative consumption apparatus. The control panel further contains provisions for the input of data for newly connected apparatuses. Also the control panel may be provided with visual signals giving a general indication of the balance between available and consumed or demanded power. At a generous energy supply one may operate via the control panel without setting priorities.

In a preferred embodiment the control of the individual consumption apparatuses consists of a distance control wherein use is made of a transmitter and receiver combination which are adjusted to each other. The receiver is coupled to the consumptionapparatus . At the command that the relative apparatus has to be switched on a signal is transmitted to the  receiver which is responsive to the frequency or the shape of that signal causing the relevant apparatus to be switched on or out. When introducing new apparatuses the receiver can be attached to the new apparatus and the transmitter to the controller in such a way that after inserting the consumption characteristics said new apparatus will be taken up in the general control.

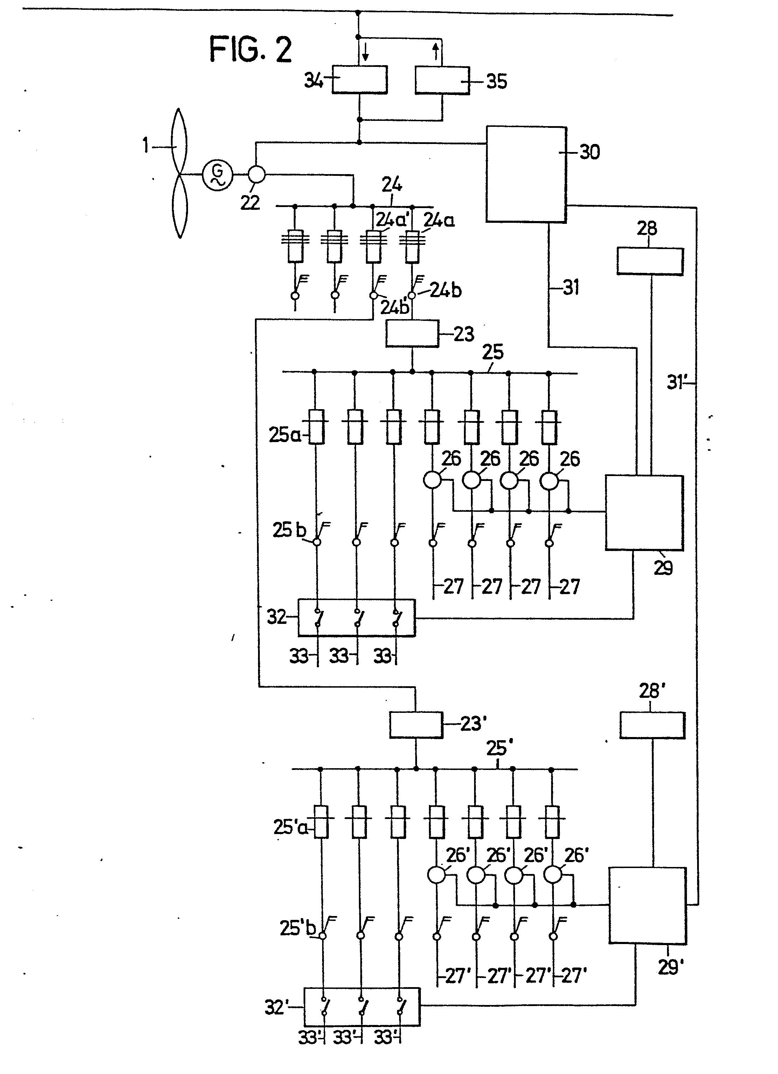

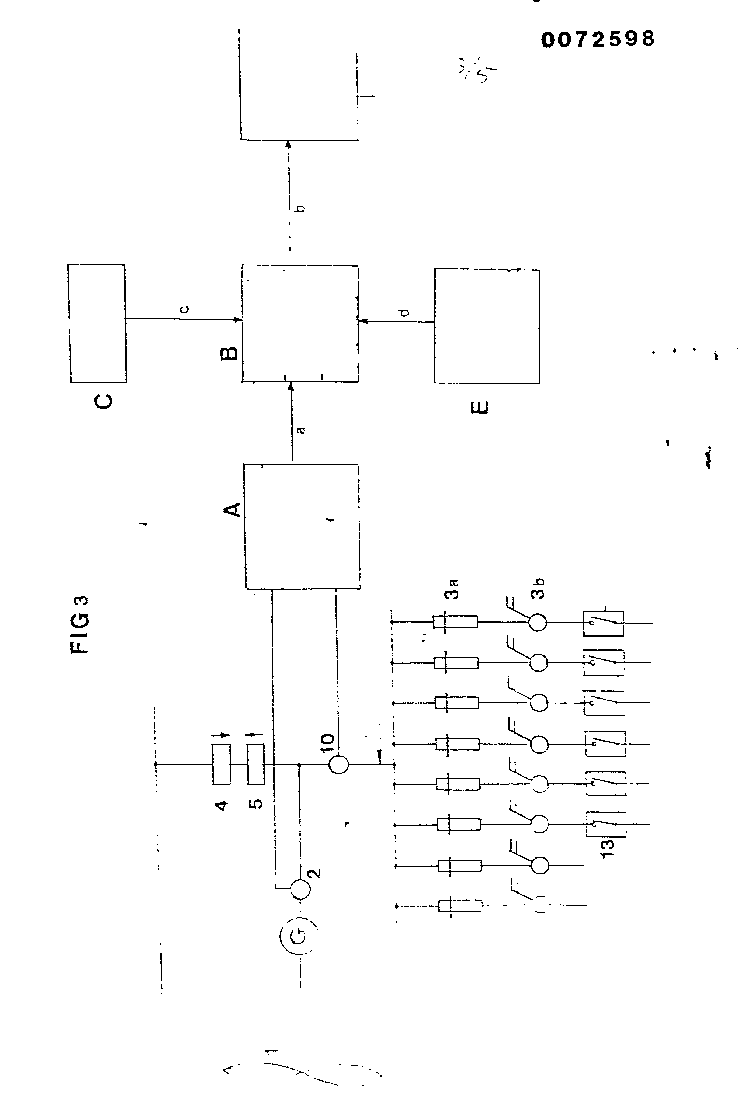

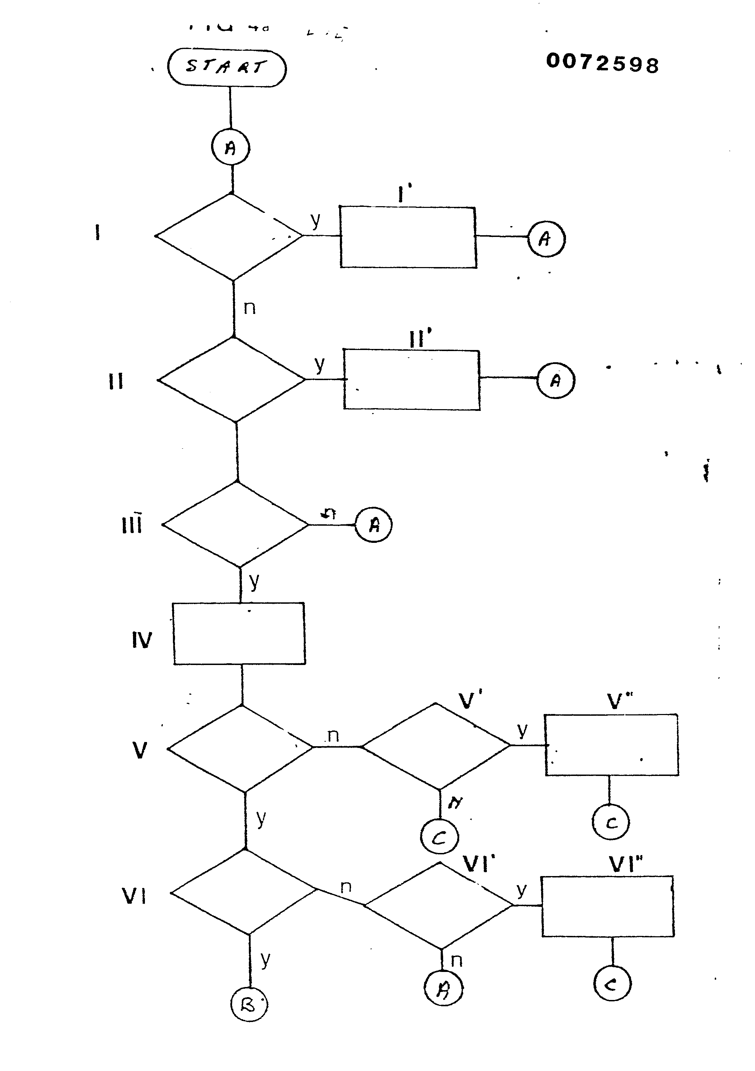

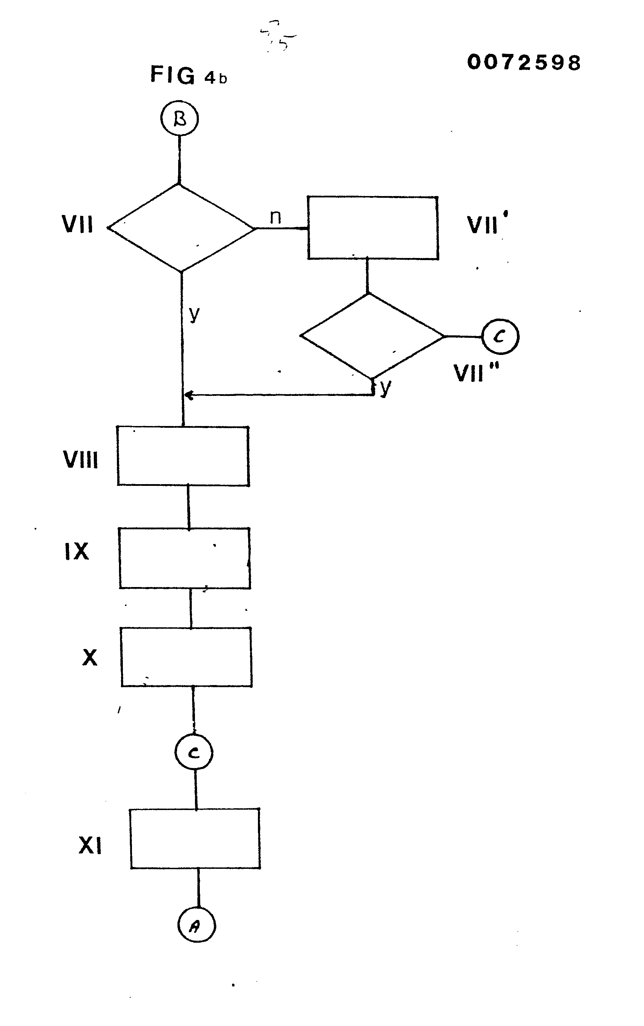

The invention will now be illustrated by means of the drawing wherein fig. 1 represents a circuit for an individual unity, fig 2 for a block of interrelated building units and fig.3, 4a and 4b represent in flow sheets further information on the working of the circuits of fig 1 and 2.

In figure 1 numeral 1 represents the wind driven generator which is suitable for an individual building  ( for example having a power of 3 KW) which through generator G and the electricity meter 2 supplies electricity to the user. In meter 2 the available power is measured which via line 2a is passed to the control unit  9.The generator is connected through line 2b via meters 4 and 5 to the electricity network, which meters resp. measure  consumption and supply of electrical power. Through distributor 3 the generator is coupled to the consumption apparatuses via fuses 3a and  group switches 3b. The control unit 9 is connected via measuring units 6 to the so called non-influenceable consumer apparatuses 7, of which regularly the consumed power is measured.The control unity further is connected to a secondary control unit 12 via line 11, said last unit being coupled to the so called influenceable consumer apparatuses 13. Further an adjusting panel 8 is present which can be manipulated by the  user and with which information relating to the energy consumption can be  passed to the controller 9.Thus by manual operation one is able to indicate which consumer apparatuses should be connected with a preset period.The characteristics of the consumer apparatuses are fed into the memory of the controller 8.

The control unity 9 will now determine from measurements made at 2 and 6 which of the influenceable apparatuses should be switched on.If enough power is available one or more of the apparatuses preset by means of control panel 8 can be switched on by a switching command of the control unity.

If enough power is available control unity 9 will release power by temporarily switching off one or more apparatuses from group b, possibly sequentially, which enables switching on of apparatuses from group c.

In figure 2 the situation is indicated for a series of independent unities which are connected to wind driven generator 1, of which for clearness' sake only two are drawn.

Generator G supplies electrical energy which is measured through meter 22 and is connected to a main distributor device 24 which may be connected through fuses 24 a, 24 a' etc and main switches 24b, 24b' etc and meters 23, 23' etc to the separate distributor devices 25,25' etc of the consumer apparatuses. For this purpose fuses 25a,25a' etc and group switches 25b,25b' etc are present. Meter 22 further is connected to the central control system 30 which via lines 31, 31' etc is connected to the controllers 29,29' etc of the separate units.The control mechanism 29,29'etc of each building regularly passes within short time intervals the power consumed and the power demanded for the block in question to the main controller.By means of the information received the central system determines how much power can be consumed per building without using the power of the utility.

The analogous parts of the two unities are the panels 28 and 28', the non-influenceable consumer apparatuses 27 and 27', the meters 26 and 26', the connections 32 and 32' and the influenceable consumer apparatuses 33 and 33'. Further a connection with the networks via meters 34 and 35 is present measuring resp the consumed power and the supplied power.

In figure 3 a further illustration of figure 1 is given by means of an added flowsheet wherein the working is explained. The blocks indicate which functions are carried out by the control unit and the control panel.

In block A the surplus power or deficit is calculated from the measuring data, i.e. the power supplied (measured in 2) and the power consumed (measured in 10).This is introduced in block B (arrow a) where the priority algorithm is chosen, the selection of the control action takes place, the tabel for the autonomous consumer apparatuses is renewed and the consumer apparatuses are switched on and off.To this end information is introduced from block C (control panel), the users indicating the apparatuses and the relative time limits (arrow c).

Further information is introduced from block D wherein the initial message of the users is stored with parameters like power, autonomous apparatuses or on demand switchable apparatuses and the characteristics of the apparatuses (arrow d).

On the basis thereof apparatus selection takes place (arrow b) to the transmitter (block D) which transmits a signal to the apparatuses provided with selective receivers.

In figure 4 the sequence of steps in a particular flowsheet is given.Starting from start condition A parameters are put in (I).In the table the abbreviations y and n stand for yes or no, i.e. the decisions of the binary controller which are constantly made on account of the data input.After input of the parameters via I'(y) the parameter table is modified and one returns to A. When the parameters are equal in the next step II (after n) the selected apparatuses are introduced.The apparatuses selection table is now modified (if not in agreement with selection (II')(y) and one returns to condition A.After passing I and II in III the power of the wind driven generator is read. Should there be a failure one returns to A,III'-n .

In IV the average power is calculated and renewed in the table. In V it is determined which power is available. If there is a shortage (V) n then either power is intermittently released (V")y or one proceeds to C (y) or one proceeds directly to C(n).

If sufficient power is present the apparatus is selected in VI and one proceeds to B(y).If not possible (n)        the power will be blocked (VI') and one returns to A (n) or the power is again released (VI" n) and proceeded to C.

In figure 4b the flowsheet is continued. Starting from condition B the switching step is effected. If there is sufficient excess of power the apparatus is started, if not (n) power is first released (VII') and one returns to B(y) or (n(C via (VII"). After starting the apparatus (VIII) the apparatus selection table is continuously renewed and updated and the indication light on the panel turns off (resp IX and X). One has reached the condition C wherein the apparatus is in action. In X the power is intermittently controlled.

**0072598**

CLAIMS

1. Process for matching the demand to the supply of electrical energy of one or more alternative energy sources which supply electrical energy to a consumer block or a series of interrelated consumer blocks wherein the electrical energy generated is distributed among the consumer apparatuses in such a way that substantially no overload of the quantity of electrical energy which is continually supplied occurs and practically no energy need to be withdrawn from the electricity networks.

2. Process according to claim 1 characterized in that the available quantity of energy is continously measured, which information is passed to a central controller; in that information related to the desired use of the energy consuming apparatuses is introduced and fixed in the form of time priorities through a control panel having at least one or more adjustable parameters, which information is passed to the central controller, which controller is coupled to all consumer apparatuses and is in controllable contact with the latter; that in the memory of the controller the characteristics of all apparatuses and components thereof have been registered; that the consumed power of the non-influenceable apparatuses is continually measured and compared with the power available; which consumer apparatuses being coupled via a control relay to the controller in such a way that the switching in and out of the apparatuses takes place via priorities introduced into the controller, which sequential switching of the apparatuses is carried out in such a way that the power presented is not exceeded, while in case of excess power a provision or reservoir may be placed in the circuit for storing heat energy or cold energy.

3. Process according to claims 1-2, wherein the available power and the power consumed as well as the power to be consumed are constantly compared and in dependence of this comparison the influenceable consumer apparatuses are controlled and switched in according to inserted time priorities or energy in the form of thermal energy is stored in reservoirs coupled with a heat pump directly connected to the energy source.

4. Process according to claim 1 wherein the influenceable consumer apparatuses are distance controlled through a control relay .

5. Process according to claim 4, characterized in that each consumer apparatus is provided with a receiver which only responds to the signal transmitted by a transmitter placed in the controller reacting to the momentary condition of power supply and power demand.

6. Process according to claim 1, wherein a hot water reservoir is heated up in case of a surplus of power.

7. Process according to claim 6, wherein a wind driven generator is used which is directly coupled to a heat pump.

8. Process according to claim 1, characterized in that larger interrelated blocks are controlled by means of a central controller which is directly coupled to the energy source through a meter and in response to information of the individually connected separate blocks supplies power to each individual block controller belonging to each block.

9. Process according to claim 8, wherein each block controller is working autonomously.

10. Circuit connected to one or more electrical energy sources for carrying out the process according to one of the foregoing claims, characterized in that it comprises a controller which through a power meter is connected to the energy source(s), in the memory thereof the characteristics of the connected consumer apparatuses are stored, there being between the controller and the influenceable consumer apparatuses a controlling device which responds to the information inserted at the demand side, as well as a control panel operable by the user and through which information according to time priorities is passed to the controller.

11. Circuit according to claim 10, characterized in that it is used for a series of independenly exploited blocks , comprising a central controller which is directly connected to the energy source(s) through a power meter and is in connection with separate controllers of each block which pass information.

12. Circuit according to claims 10-12, characterized in that the controlling device consists of a receiver connected to each consumer apparatus which selectively responds to the signals of the separate controller transmitted by a transmitter connected to the separate controller.

13. Circuit according to claims 10-12, characterized in that it comprises a wind driven generator, which is directly coupled to a heat pump.

14. Circuit according to claims 10-12, characterized in that the controller is directecly connected to the electrical networks.

15. Circuit according to claim 10, characterized in that it comprises an energy source (1), a power meter (2) connected to the energy source (1), a control unit (9) connected to the energy source (1) via the meter (2), a control panel (8) arranged in the consumers block connected with the control unit (9), a distributor (3) to which consumer apparatuses (7) are connected which via meters (6) are in communication with the control unit (9) as well as influenceable consumer apparatuses (13), a controlling device (12) which is connected to the influenceable consumer appara tuses (13) via the controller (9), which control unit (9) has stored the characteristics of the consumer apparatuses (13) in its memory, as well as a connection with the electricity networks via meters (4 and 5) which resp measure the power consumed and the power supplied.

16. Circuit arranged for use with an interrelated number of blocks which are exploited via one or more energy sources, characterized in that a central controller (30) is present which is coupled to the energy source (1) via a power meter (22), which central controller (30) is in communication with the separate controllers (29,29' etc) for the individual blocks, which energy source is connected to the distributors (25,25'etc) of the consuming groups via a central distributor (24) with fuses (24a,24a' etc) and central switches (24b,24b' etc) through power meters (23,23' etc), which separate controllers (29,29' etc) are connected to the non-influenceable consumer apparatuses (27,27'.etc) through power meters (26,26' etc) and through controlling devices (32,32' etc) are connected to the influenceable consumer apparatuses (33,33' etc) in each block separately,which electrical energy source may also be coupled to the electricity networks through meters (34,35).

# FIG. 1

FIG. 2

0072598

FIG 3

FIG 4a

START

0072598

FIG 4b

0072598

European Patent
Office

**EUROPEAN SEARCH REPORT**

**0072598**
Application number

EP 82 20 1016

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | H 02 J 3/14 |
| A | US-A-4 216 384 (F.A.HURLEY) *Column 1, line 60 to column 2, line 60; column 3, line 50 to column 5, line 25; figures 1,2* | 1-4,10 ,14,15 | H 02 J 3/38 F 03 D 9/00 |
| | --- | | |
| A | US-A-3 842 249 (M.A.GEYER et al.) *Abstract; column 3, line 47 to column 5, line 5; column 6, lines 13 to 20; figures 1,2* | 1,2,4, 5,8,10 -12,15 | |
| | --- | | |
| A | DE-A-2 709 146 (W.MAYER-SCHWINNING) *Page 4, lines 1 to 25; page 5, line 25 to page 6, line 3; page 9, lines 1 to 11; figure 1* | 1,7 | |
| | | | **TECHNICAL FIELDS SEARCHED (Int. Cl. ³)** |
| | --- | | |
| A | US-A-4 205 235 (D.PAL et al.) *Column 2, lines 50 to 68; figure 1* | 1 | H 02 J 3/00 |
| | --- | | F 03 D 9/00 |
| A | FR-A-1 010 982 (BUREAU D'ETUDES SCIENTIFIQUES ET TECHNIQUES) *Page 2, left-hand column, line 6 to right-hand column, line 6; figure 1* | 3,6,7, 13 | G 05 F 1/00 |
| | ----- | | |

The present search report has been drawn up for all claims

| Place of search THE HAGUE | Date of completion of the search 18-11-1982 | Examiner POINT A.G.F. |
|---|---|---|